# EUROPÄISCHE PATENTSCHRIFT

(11) **EP 2 904 289 B1**
(45) Veröffentlichungstag und Bekanntmachung des Hinweises auf die Patenterteilung: **14.08.2019**
(21) Anmeldenummer: 13779119.0
(22) Anmeldetag: 18.09.2013
(51) Int. Cl.: F16F 15/131

(54) **DREHSCHWINGUNGSDÄMPFER**
TORSIONAL VIBRATION DAMPER
AMORTISSEUR DE VIBRATIONS DE TORSION

(30) Priorität: 01.10.2012 DE 102012217956
(43) Veröffentlichungstag der Anmeldung: 12.08.2015
(73) Patentinhaber: Schaeffler Technologies AG & Co. KG, 91074 Herzogenaurach (DE)
(72) Erfinder: MENDE, Hartmut, 77815 Bühl (DE); EDL, Ralf, 77855 Achern (DE); KOOY, Ad, 77855 Mösbach (DE); BOSSE, Michael, 76547 Sinzheim (DE)
(86) Internationale Anmeldenummer: PCT/DE2013/200179
(87) Internationale Veröffentlichungsnummer: WO 2014/053130

(56) Entgegenhaltungen:
- DE-A1- 19 845 694
- DE-U1- 20 022 909
- DE-U1- 29 715 250
- US-A- 6 047 804

## Beschreibung

Die Erfindung betrifft einen Drehschwingungsdämpfer mit zwei relativ zueinander entgegen der Kraft zumindest eines Kraftspeichers verdrehbarer Schwungmassen, die relativ zu einander mittels eines Axiallagers und mittels eines Radiallagers gelagert sind.

Drehschwingungsdämpfer der obigen Art sind beispielsweise als Zweimassenschwungräder oder andere Dämpfer bekannt.

Bei Drehschwingungsdämpfern sind Axiallager und Radiallager radial innerhalb der Verschraubungsbohrungen auf kleinem Radius bekannt.

DE 198 45 694 A1 zeigt einen Drehschwingungsdämpfer mit den Merkmalen des Oberbegriffs des Anspruchs 1.

Daher ist es die Aufgabe der Erfindung einen Drehschwingungsdämpfer zu schaffen, der einfach aufgebaut ist und dennoch eine hohe Lebensdauer gutem Isolationsverhalten aufweist.

Diese Aufgabe wird durch einen Drehschwingungsdämpfer mit den Merkmalen von Anspruch 1 gelöst.

Ein Ausführungsbeispiel der Erfindung sieht einen Drehschwingungsdämpfer mit ein ersten Schwungmasse und einer zweiten Schwungmasse vor, die relativ zueinander entgegen der Kraft zumindest eines Kraftspeichers verdrehbar angeordnet sind, und die relativ zu einander mittels eines Axiallagers und mittels eines Radiallagers gelagert sind, das Axiallager und das Radiallager als Gleitlager ausgebildet sind und wobei in einer der Schwungmassen eine Anzahl von Verschraubungsbohrungen zur Verschraubung mit einer Kurbelwelle eines Verbrennungsmotors angeordnet ist, dadurch gekennzeichnet, dass eines der beiden Lager von Axiallager und Radiallager radial innerhalb der Verschraubungsbohrungen angeordnet ist und das andere der beiden Lager von Axiallager und Radiallager radial außerhalb der Verschraubungsbohrungen angeordnet ist. Dadurch wird erreicht, dass die notwendige Robustheit erreicht wird, so dass die immer wieder steigende geforderte Lebensdauer erreicht bzw. überschritten wird, obwohl keine oder nur geringe Einbußen bei dem Isolationsverhalten in Kauf genommen werden müssen. Besonders vorteilhaft ist es, wenn das Axiallager und/oder das Radiallager als ein Gleitlager ausgebildet ist.

Dabei ist es besonders zweckmäßig, wenn eine der beiden Schwungmassen einen sich in axialer Richtung erstreckenden Flansch aufweist, auf welchem radial außen die andere der beiden Schwungmassen mit einem sich in axialer Richtung erstreckenden Gegenflansch aufgenommen ist, wobei zwischen dem Flansch und dem Gegenflansch ein Lagerring des Radiallagers angeordnet ist. Dadurch wird eine einfache Gestaltung erreicht, die den Anforderungen an die Dauerhaltbarkeit genügt.

Auch ist es zweckmäßig, wenn der Lagerring zwischen einer radial innen liegenden Gleitfläche der einen Schwungmasse und einer radial außen liegenden Gleitfläche der anderen Schwungmasse angeordnet ist. Dadurch wird eine günstige Gestaltung für ein Gleitlager geschaffen.

Erfindungsgemäß ist vorgesehen, dass die beiden Schwungmassen jeweils eine sich in radialer Richtung und in Umfangsrichtung erstreckende ebene ringförmige Gleitfläche aufweisen, die sich im Wesentlichen gegenüber liegen, wobei ein Lagerring des Axiallagers zwischen den beiden Gleitflächen angeordnet ist. Auch dadurch wird eine günstige Gestaltung geschaffen, die einfach herzustellen ist.

Weiter ist erfindungsgemäß vorgesehen, dass zwischen dem Lagerring des Axiallagers und einer Gleitfläche einer Schwungmasse ein Reibring angeordnet ist. Dadurch kann eine gezielte Reibung in den Drehschwingungsdämpfer integriert werden, um die Drehschwingungen in ihrer Amplitude günstig dämpfen zu können.

Auch ist es zweckmäßig, wenn der Reibring zumindest ein Halteelement aufweist, welches in axialer Richtung von dem Reibring absteht und einen Ansatz einer Schwungmasse radial außen axial übergreift und/oder radial innen umgreift. Durch die Vorsehung des Halteelements ist es zweckmäßig, dieses an einer der Schwungmassen zu zentrieren und es vor der Montage auch zu halten, damit eine einfache Montage ermöglicht wird.

Auch ist es zweckmäßig, wenn der Reibring zumindest ein Halteelement aufweist, welches in axialer Richtung von dem Reibring absteht und den Lagerring radial innen axial umgreift. Dadurch wird der Lagerring mit dem Reibring zentriert bzw. von diesem gehalten.

Auch ist es zweckmäßig, wenn der Lagerring zumindest ein Halteelement aufweist, welches in axialer Richtung von dem Lagerring absteht und einen Ansatz einer Schwungmasse radial außen axial übergreift und/oder radial innen umgreift. Das Halteelement dient dabei bevorzugt der Zentrierung des Lagerrings.

Bei einem weiteren Ausführungsbeispiel ist es zweckmäßig, wenn das Halteelement eine Buchse bildet, das in eine Ausnehmung einer Schwungmasse eingreift. Mittels dieser Buchse kann der Lagerring einfach platziert und zentriert werden. Dabei kann die Buchse vorteilhaft auch als Lagerring verwendet werden.

Auch ist es zweckmäßig, wenn das Halteelement mittels der Buchse in der Schwungmasse zentriert ist.

Die vorliegende Erfindung wird nachfolgend anhand bevorzugter Ausführungsbeispiele in Verbindung mit den zugehörigen Figuren näher erläutert:
Dabei zeigen:
- Figur 1: eine schematische Darstellung eines Drehschwingungsdämpfers nach dem Stand der Technik,
- Figur 2: ein Detail einer Lagerung eins erfindungsgemäßen Drehschwingungsdämpfers,
- Figur 3: ein Detail einer Lagerung eins erfindungsgemäßen Drehschwingungsdämpfers,
- Figur 4: ein Detail einer Lagerung eins erfindungsgemäßen Drehschwingungsdämpfers, und
- Figur 5: ein Detail einer Lagerung eins erfindungsgemäßen Drehschwingungsdämpfers.

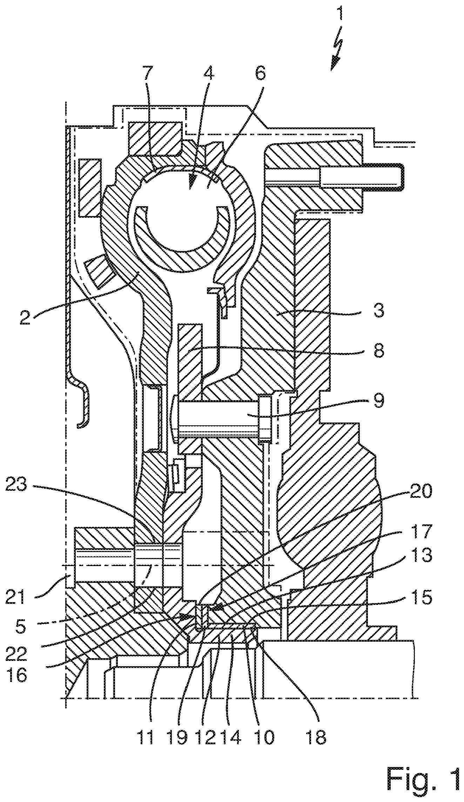

Die Figur 1 zeigt einen Drehschwingungsdämpfer 1, wie er zur Dämpfung von Drehschwingungen im Antriebsstrang eines Kraftfahrzeuges zwischen einer Kurbelwelle eines Verbrennungsmotors und einer Getriebeeingangswelle angeordnet werden kann.

Der Drehschwingungsdämpfer 1 stellt einen Drehschwingungsdämpfer gemäß dem Stand der Technik schematisch dar, wobei der Drehschwingungsdämpfer 1 eine erste Schwungmasse 2 und eine zweite Schwungmasse 3 aufweist, die entgegen der Kraft zumindest eines Kraftspeichers 4 verdrehbar zueinander angeordnet sind. Die Schwungmasse 2 ist dabei radial innen über in der Schwungmasse 2 vorgesehene Verschraubungsbohrungen 5 und durch die Verschraubungsbohrungen 5 durchgeführte nicht dargestellte Schrauben mit der Kurbelwelle eines Verbrennungsmotors verschraubbar.

Die Verschraubungsbohrungen 5 sind in einer Mehrzahl in Umfangsrichtung der ersten Schwungmasse 2 verteilt angeordnet. Zur Bildung einer Rückstellkraft für die Relativverdrehung der beiden Schwungmassen 2, 3 sind über den Umfang des Drehschwingungsdämpfers 1 üblicherweise auch eine Mehrzahl von Kraftspeichern 4, wie beispielsweise Druckfedern, angeordnet, die in Taschen 6 mit radial äußerer Verschleiß schützender Gleitabstützung 7 angeordnet sind. In diese Taschen 6 greift ein Flansch 8 zwischen die Kraftspeicher 4 ein, der beispielsweise mittels eines Nietelements 9 mit der zweiten Schwungmasse 3 drehfest verbunden ist, um über den Flansch 8 eine Kraft von der zweiten Schwungmasse 3 auf den Kraftspeicher 4 ausüben zu können.

Die beiden Schwungmassen 2, 3 sind radial innen mittels eines Radiallagers 10 und mittels eines Axiallagers 11 relativ zueinander gelagert. Die erste Schwungmasse 2 weist dazu einen sich in axialer Richtung erstreckenden Flansch 12 auf, wobei die zweite Schwungmasse 3 ein sich ebenfalls in axialer Richtung erstreckenden Flansch 13 mit aufeinander zuweisenden Gleitflächen 14,15 aufweist, wobei zwischen diesen Gleitflächen 14, 15 der Flansche 12, 13 der Schwungmassen 2, 3 ein Lagerring 19 angeordnet ist.

Auch weist die erste Schwungmasse 2 eine sich in radialer Richtung und in Umfangsrichtung erstreckende Gleitfläche 16 auf, wobei auch die zweite Schwungmasse 3 eine sich in radialer Richtung und in Umfangsrichtung sich erstreckende Gleitfläche 17 aufweist, die sich wiederum im Wesentlichen gegenüberstehen. Zwischen den Gleitflächen 16, 17 ist ein Lagerring 19 und ggf. ein Reibring 20 benachbart zueinander angeordnet, derart, dass zwischen den beiden Gleitflächen 16, 17 der Lagerring 19 und der Reibring 20 parallel zueinander angeordnet sind, so dass die Gleitfläche 16 mit dem Reibring 20 in Kontakt ist und der Reibring 20 mit dem Lagerring 19 in Kontakt und der Lagerring 19 mit der Gleitfläche 17 in Kontakt ist.

Die Anordnung des Radiallagers 10 und des Axiallagers 11 ist derart ausgebildet, dass beide Lager 10, 11 radial innerhalb der Verschraubungsbohrungen 5 angeordnet sind.

Die Definition der Anordnung der Verschraubungsbohrungen 5 kann zum einen bezüglich der Mittellinie 21 der Verschraubungsbohrung 5 oder der radial innersten Kontur 22 der Verschraubungsbohrung oder der radial äußersten Kontur 23 der Verschraubungsbohrung 5 erfolgen. Im Beispiel der Figur 1 sind das Radiallager 10 und das Axiallager 11 radial innerhalb sämtlicher genannter Definitionen der Verschraubungsbohrung 5 angeordnet, also radial innerhalb der innersten Kontur 22, radial innerhalb der Mittellinie 21 und radial innerhalb der äußersten Kontur 23.

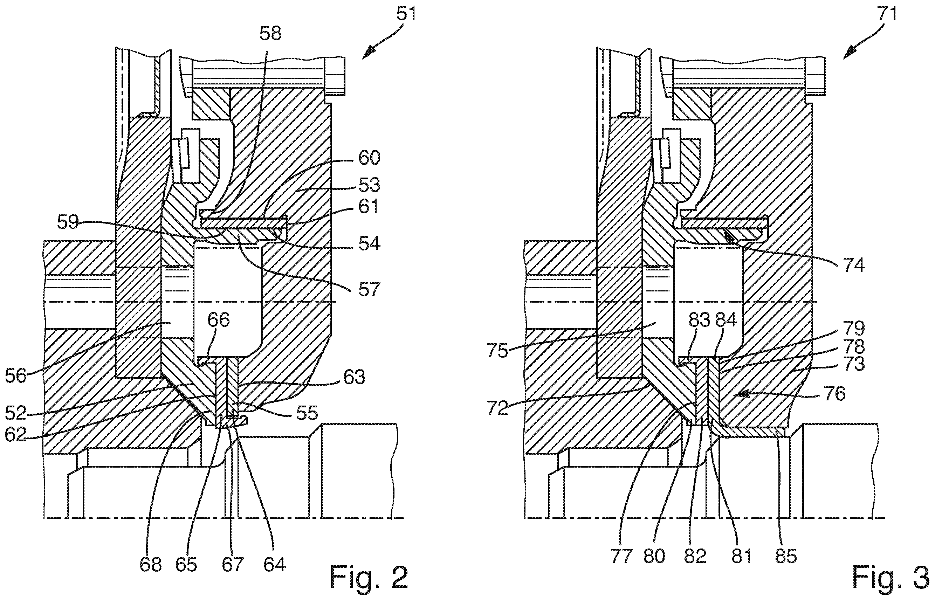

Die Figuren 2 bis 5 zeigen Ausführungsbeispiele erfindungsgemäßer Drehschwingungsdämpfer, die jedoch in den Darstellungen der Figuren 2 bis 5 nur teilweise dargestellt sind. Dabei ist der radial innere Bereich der Schwungmassen im Bereich der Verschraubungsbohrung dargestellt, wobei die ansonsten vorhandenen radial außen liegenden Elemente im Wesentlichen der Gestaltung der Figur 1 entsprechen können, so dass deren Vorhandensein nicht weiter erläutert wird. Diesbezüglich wird Bezug auf die Beschreibung der Figur 1 genommen, deren Inhalt auch für die Ausführungsbeispiele der Figuren 2 bis 5 gültig ist.

Die Figur 2 zeigt einen Drehschwingungsdämpfer 51 mit einer ersten Schwungmasse 52 und einer zweiten Schwungmasse 53, die mittels eines Radiallagers 54 und mittels eines Axiallagers 55 relativ zueinander gelagert sind. Dabei ist das Axiallager 55 radial innerhalb der Verschraubungsbohrungen 56 angeordnet, wobei das Radiallager 54 radial außerhalb der Verschraubungsbohrungen 56 angeordnet ist.

Die erste Schwungmasse 52 weist einen sich in axialer Richtung erstreckenden Flansch 57 auf, der einem sich in axialer Richtung erstreckenden Flansch 58 der zweiten Schwungmasse 53 gegenübersteht, wobei beide Flansche jeweils eine Gleitfläche 59, 60 aufweisen, die aufeinander zu gerichtet sind. Zwischen den Gleitflächen 59, 60 ist ein Lagerring 61 angeordnet, der sich im Wesentlichen in axialer Richtung und in Umfangsrichtung erstreckt und Gleitflächen 59, 60 aufweist, die mit den Gleitflächen 59, 60 der sich in axialer Richtung erstreckenden Flansche 58, 59 kooperieren.

Das Axiallager 55 weist an der ersten Schwungmasse 52 und an der zweiten Schwungmasse 53 jeweils eine Gleitfläche 62, 63 auf, die sich jeweils in radialer Richtung und in Umfangsrichtung erstrecken und im Wesentlichen eben ausgebildet sind. Die Gleitflächen 62, 63 sind als ringförmige Gleitflächen ausgebildet. Die beiden Gleitflächen 62, 63 stehen sich gegenüber, wobei zwischen den beiden Gleitflächen 62 und 63 ein Lagerring 64 und ein Reibring 65 angeordnet sind.

Der Reibring 65 weist radial außen ein Halteelement 66 und radial innen ein Halteelement 67 auf, wobei das Halteelement 66 von dem oberen Endbereich des Reibrings 65 in axialer Richtung hin zur ersten Schwungmasse 52 hervorsteht, und das Halteelement 67 vom unteren radial inneren Bereich des Reibrings 65 in Richtung auf die zweite Schwungmasse 52 axial vorsteht. Darüber hinaus ist zu erkennen, dass die Halteelemente 66, 67 an ihren den Schwungmassen 52, 53 zugeordneten Endbereichen hakenartige Vorsprünge aufweisen, die für das radial äußere Halteelement 66 nach radial innen weisen und für das radial innere Halteelement 67 nach radial außen weisen. Mittels des Halteelements 66 kann der Reibring 65 auf den Flansch 68 der ersten Schwungmasse aufgenommen werden, so dass das Halteelement 66 den Flansch radial außen umgreift. Das Halteelement 67 dient dazu, den Lagerring 64 zu halten und zu zentrieren.

Die Figur 3 zeigt ein weiteres erfindungsgemäßes Ausführungsbeispiel eines Drehschwingungsdämpfers 71 mit einer ersten Schwungmasse 72 und einer zweiten Schwungmasse 73. Das Radiallager 74 ist radial außerhalb der Verschraubungsbohrung 75 angeordnet, wobei das Axiallager 76 radial innerhalb der Verschraubungsbohrung 75 angeordnet ist.

Das Axiallager 76 ist wiederum gebildet durch die Gleitflächen 77, 78 der Flansche 79, 80 der beiden Schwungmassen 72, 73, wobei zwischen den beiden Gleitflächen 77, 78 ein Lagerring 81 und ein Reibring 82 angeordnet sind. Der Reibring 82 weist radial außen ein Halteelement 83 auf, das entsprechend dem Halteelement 66 der Figur 2 ausgebildet ist.

Der Lagerring 81 weist einen im Wesentlichen ebenen sich in radialer Richtung erstreckenden Bereich 84 auf, der als Lagerring dient, wobei radial innen an diesen Bereich 84 ein Bereich 85 sich anschließt, der buchsenartig in axialer Richtung hervorsteht und der beispielsweise radial innen in eine Ausnehmung der zweiten Schwungmasse aufgenommen sein kann.

Durch den buchsenartigen Bereich 85 kann der Lagerring von der zweiten Schwungmasse gehalten und mittels dieser zentriert sein.

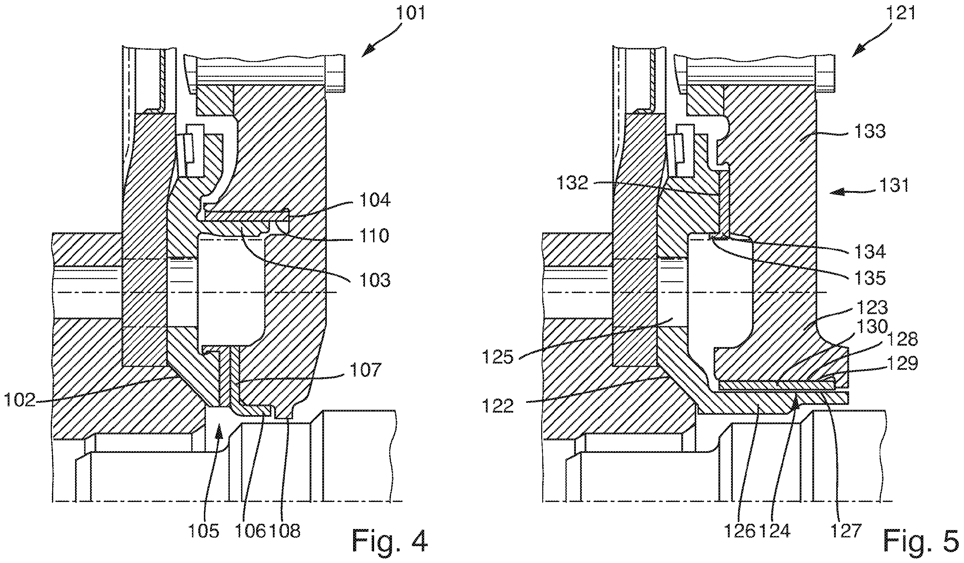

Die Figur 4 offenbart einen Drehschwingungsdämpfer 101 mit einer ersten Schwungmasse 102 und einer zweiten Schwungmasse 103. Das Radiallager 104 ist entsprechend dem Radiallager 74 der Figur 3 ausgebildet, wobei das Axiallager 105 ähnlich dem Axiallager 76 der Figur 3 ausgebildet ist. Zu erkennen ist, dass der Bereich 106 des Lagerrings 107, der sich in axialer Richtung buchsenartig erstreckt, eine kürzere Ausdehnung aufweist als die axiale Erstreckung der zweiten Schwungmasse 103 im radial inneren Bereich. Die zweite Schwungmasse weist dazu im radial inneren Bereich einen sich in radialer Richtung nach innen erstreckenden Vorsprung 108 auf, der in axialer Richtung als Anschlag für den Bereich 106 dient.

Dieser Vorsprung 108 kann beispielsweise für das Wuchten der Schwungmasse 103 genutzt werden, wobei der Vorsprung gleichzeitig auch als Schutz des Axiallagers 105 als Gleitlager bei der Montage des Getriebes dienen kann. Dieser Schutz ist vorteilhaft, wenn die Getriebeeingangswelle in die zentrale Öffnung radial innerhalb des Axiallagers 105 eingreift und bei Schrägstellung der Getriebeeingangswelle das Axiallager 105 beispielsweise beschädigen könnte.

Weiterhin fällt in Figur 4 auf, dass der Flansch 109 der ersten Schwungmasse 102 für die Ausbildung des Radiallagers 104 in axialer Richtung verkürzt ist, so dass eine Tasche 110 entsteht, zwischen einer Ausnehmung der zweiten Schwungmasse 103 und dem Flansch 109 der ersten Schwungmasse. Diese Tasche ist vorteilhaft, da eine eindeutigere bessere Kalibrierung des Radiallagers 104 durchgeführt werden kann, ohne dass der Flansch 109 gegen eine Wand der zweiten Schwungmasse 103 anstößt.

Die Figur 5 zeigt einen Drehschwingungsdämpfer 121 mit einer ersten Schwungmasse 122 und einer zweiten Schwungmasse 123, wobei das Radiallager 124 radial innerhalb der Verschraubungsbohrung 125 angeordnet ist. Die erste Schwungmasse 122 weist dazu einen Flansch 126 auf, der sich in axialer Richtung erstreckt und radial außen eine Gleitfläche 127 aufweist. Die zweite Schwungmasse 123 weist ebenso einen Flansch 128 mit einer Gleitfläche 129 auf, wobei die Gleitfläche 127 der Gleitfläche 129 gegenübersteht. Zwischen den beiden Gleitflächen 127, 129 ist ein Lagerring 130 angeordnet, welcher mit seinen radial innen- und außen liegenden Gleitflächen die Gleitflächen 127, 129 der Flansche berühren kann.

Radial außerhalb der Verschraubungsbohrung 125 ist das Axiallager 131 angeordnet, wobei die erste Schwungmasse 122 eine Gleitfläche 132 und die zweite Schwungmasse 123 eine Gleitfläche 133 aufweisen, die sich im Wesentlichen in radialer Richtung und in Umfangsrichtung erstrecken und kreisringförmige Gleitflächen bilden. Diese Gleitflächen 132, 133 stehen sich im Wesentlichen gegenüber und nehmen den Lagerring 134 zwischen sich auf.

Dabei kann es vorteilhaft sein, wenn der Lagerring 134 radial innen einen sich in axialer Richtung erstreckenden Ansatz 135 aufweist, welcher sich radial innen an der ersten Schwungmasse in einer Aufnahme anlegt, um den Lagerring 134 zu zentrieren.

Bei den geschilderten Ausführungsbeispielen zeigt sich, dass die Fläche der Axiallager aufgrund der größeren Radienbereiche um mehr als 50 bzw. mehr als 60 % im Vergleich zum Stand der Technik vergrößert sind, wobei auch die Radiallager eine vergrößerte Lagerfläche aufweisen können. Die Anbindung der Lagerringe an die Schwungmassen, die bevorzugt aus Gussmaterial oder aus Blechmaterial hergestellt sein können, kann beispielsweise mittels Kleben erfolgen, um einen Lagerring an einer der Schwungmassen zu befestigen. Dadurch wird insbesondere zwischen dem Lagerring und der Schwungmasse, die aus Gussmaterial hergestellt ist, eine Bewegung verhindert.

### Bezugszeichenliste

- 1: Drehschwingungsdämpfer
- 2: Schwungmasse
- 3: Schwungmasse
- 4: Kraftspeicher
- 5: Verschraubungsbohrung
- 6: Tasche
- 7: Gleitabstützung
- 8: Flansch
- 9: Nietelement
- 10: Radiallager
- 11: Axiallager
- 12: Flansch
- 13: Flansch
- 14: Gleitfläche
- 15: Gleitfläche
- 16: Gleitfläche
- 17: Gleitfläche
- 18: Lagerring
- 19: Lagerring
- 20: Reibring
- 21: Mittellinie
- 22: innerste Kontur
- 23: äußerste Kontur
- 51: Drehschwingungsdämpfer
- 52: Schwungmasse
- 53: Schwungmasse
- 54: Radiallager
- 55: Axiallager
- 56: Verschraubungsbohrung
- 57: Flansch
- 58: Flansch
- 59: Gleitfläche
- 60: Gleitfläche
- 61: Lagerring
- 62: Gleitfläche
- 63: Gleitfläche
- 64: Lagerring
- 65: Reibring
- 66: Halteelement
- 67: Halteelement
- 68: Flansch
- 71: Drehschwingungsdämpfer
- 72: Schwungmasse
- 73: Schwungmasse
- 74: Radiallager
- 75: Verschraubungsbohrung
- 76: Axiallager
- 77: Gleitfläche
- 78: Gleitfläche
- 79: Flansch
- 80: Flansch
- 81: Lagerring
- 82: Reibring
- 83: Halteelement
- 84: Bereich
- 85: Bereich
- 101: Drehschwingungsdämpfer
- 102: Schwungmasse
- 103: Schwungmasse
- 104: Radiallager
- 105: Axiallager
- 106: Bereich
- 107: Lagerring
- 108: Vorsprung
- 109: Flansch
- 110: Tasche
- 121: Drehschwingungsdämpfer
- 122: Schwungmasse
- 123: Schwungmasse
- 124: Radiallager
- 125: Verschraubungsbohrungen
- 126: Flansch
- 127: Gleitfläche
- 128: Flansch
- 129: Gleitfläche
- 130: Lagerring
- 131: Axiallager
- 132: Gleitfläche
- 133: Gleitfläche
- 134: Lagerring
- 135: Ansatz

## Patentansprüche

1. Drehschwingungsdämpfer (51,71,101,121) mit einer ersten Schwungmasse (52,72,102,122) und einer zweiten Schwungmasse (53,73,103,123), die relativ zueinander entgegen der Kraft zumindest eines Kraftspeichers (4) verdrehbar angeordnet sind, und die relativ zu einander mittels eines Axiallagers (55,76,105,131) und mittels eines Radiallagers (54,74,104,124) gelagert sind, wobei das Axiallager (55,76,105,131) und das Radiallager (54,74,104,124) als Gleitlager ausgebildet sind und wobei in einer der Schwungmassen (53,73,103,123,52,72,102,122) eine Anzahl von Verschraubungsbohrungen (56,75,125) zur Verschraubung mit einer Kurbelwelle eines Verbrennungsmotors angeordnet ist, wobei eines der beiden Lager (54,74,104,124,55,76,105,131) von Axiallager und Radiallager radial innerhalb der Verschraubungsbohrungen (56,75,125) angeordnet ist und das andere der beiden Lager (54,74,104,124,55,76,105,131) von Axiallager und Radiallager radial außerhalb der Verschraubungsbohrungen (56,75,125) angeordnet ist, wobei die beiden Schwungmassen (52,72,102,122,53,73,103,123) jeweils eine sich in radialer Richtung und in Umfangsrichtung erstreckende ebene ringförmige Gleitfläche (62,63) aufweisen, die sich im Wesentlichen gegenüber liegen, wobei ein Lagerring (64) des Axiallagers (55) zwischen den beiden Gleitflächen (62,63) angeordnet ist, **dadurch gekennzeichnet, dass** zwischen dem Lagerring (64) des Axiallagers (55) und einer Gleitfläche (62) einer Schwungmasse (52) ein Reibring (65) angeordnet ist.

2. Drehschwingungsdämpfer nach Anspruch 1, **dadurch gekennzeichnet, dass** eine der beiden Schwungmassen (52,72,102,122,53,73,103,123) einen sich in axialer Richtung erstreckenden Flansch (57) aufweist, auf welchem radial außen die andere der beiden Schwungmassen mit einem sich in axialer Richtung erstreckenden Gegenflansch (58) aufgenommen ist, wobei zwischen dem Flansch und dem Gegenflansch ein Lagerring (61)des Radiallagers angeordnet ist.

3. Drehschwingungsdämpfer nach Anspruch 2, **dadurch gekennzeichnet, dass** der Lagerring (61) zwischen einer radial innen liegenden Gleitfläche der einen Schwungmasse (52,72,102,122) und einer radial außen liegenden Gleitfläche der anderen Schwungmasse (53,73,103,123) angeordnet ist.

4. Drehschwingungsdämpfer nach einem der Ansprüche 1 - 3, **dadurch gekennzeichnet, dass** der Reibring (65) zumindest ein Halteelement (66) aufweist, welches in axialer Richtung von dem Reibring absteht und einen Ansatz einer Schwungmasse radial außen axial übergreift und/oder radial innen umgreift.

5. Drehschwingungsdämpfer nach einem der Ansprüche 1 - 4, **dadurch gekennzeichnet, dass** der Reibring (65) zumindest ein Halteelement (67) aufweist, welches in axialer Richtung von dem Reibring absteht und den Lagerring radial innen axial umgreift.

6. Drehschwingungsdämpfer nach einem der vorhergehenden Ansprüche, **dadurch gekennzeichnet, dass** der Lagerring zumindest ein Halteelement aufweist, welches in axialer Richtung von dem Lagerring absteht und einen Ansatz einer Schwungmasse radial außen axial übergreift und/oder radial innen umgreift.

7. Drehschwingungsdämpfer nach Anspruch 6, **dadurch gekennzeichnet, dass** das Halteelement (85, 106) eine Buchse bildet, das in eine Ausnehmung einer Schwungmasse eingreift.

8. Drehschwingungsdämpfer nach Anspruch 7, **dadurch gekennzeichnet, dass** das Halteelement (85,106) mittels der Buchse in der Schwungmasse zentriert ist.

## Claims

1. Torsional vibration damper (51, 71, 101, 121) having a first centrifugal mass (52, 72, 102, 122) and a second centrifugal mass (53, 73, 103, 123) which are arranged such that they can be rotated relative to one another counter to the force of at least one force accumulator (4), and which are mounted relative to one another by means of an axial bearing (55, 76, 105, 131) and by means of a radial bearing (54, 74, 104, 124), the axial bearing (55, 76, 105, 131) and the radial bearing (54, 74, 104, 124) being configured as plain bearings, and a number of screwing bores (56, 75, 125) for screwing to a crankshaft of an internal combustion engine being arranged in one of the centrifugal masses (53, 73, 103, 123, 52, 72, 102, 122), one of the two bearings (54, 74, 104, 124, 55, 76, 105, 131) of axial bearing and radial bearing being arranged radially inside the screwing bores (56, 75, 125), and the other one of the two bearings (54, 74, 104, 124, 55, 76, 105, 131) of axial bearing and radial bearing being arranged radially outside the screwing bores (56, 75, 125), the two centrifugal masses (52, 72, 102, 122, 53, 73, 103, 123) in each case having a planar annular sliding face (62, 63) which extends in the radial direction and in the circumferential direction, which sliding faces (62, 63) lie substantially opposite one another, a bearing ring (64) of the axial bearing (55) being arranged between the two sliding faces (62, 63), **characterized in that** a friction ring (65) is arranged between the bearing ring (64) of the axial bearing (55) and a sliding face (62) of a centrifugal mass (52).

2. Torsional vibration damper according to Claim 1, **characterized in that** one of the two centrifugal masses (52, 72, 102, 122, 53, 73, 103, 123) has a flange (57) which extends in the axial direction and on which the other one of the two centrifugal masses is received radially on the outside by way of a mating flange (58) which extends in the axial direction, a bearing ring (61) of the radial bearing being arranged between the flange and the mating flange.

3. Torsional vibration damper according to Claim 2, **characterized in that** the bearing ring (61) is arranged between a radially inner sliding face of the one centrifugal mass (52, 72, 102, 122) and a radially outer sliding face of the other centrifugal mass (53, 73, 103, 123) .

4. Torsional vibration damper according to one of Claims 1 to 3, **characterized in that** the friction ring (65) has at least one holding element (66) which projects from the friction ring in the axial direction and engages over a shoulder of a centrifugal mass axially radially on the outside and/or engages around it radially on the inside.

5. Torsional vibration damper according to one of Claims 1 to 4, **characterized in that** the friction ring (65) has at least one holding element (67) which projects from the friction ring in the axial direction and engages around the bearing ring axially radially on the inside.

6. Torsional vibration damper according to one of the preceding claims, **characterized in that** the bearing ring has at least one holding element which projects from the bearing ring in the axial direction and engages over a shoulder of a centrifugal mass axially radially on the outside and/or engages around it radially on the inside.

7. Torsional vibration damper according to Claim 6, **characterized in that** the holding element (85, 106) forms a connector which engages into a recess of a centrifugal mass.

8. Torsional vibration damper according to Claim 7, **characterized in that** the holding element (85, 106) is centred in the centrifugal mass by means of the connector.

## Revendications

1. Amortisseur de vibrations de torsion (51, 71, 101, 121) comprenant une première masse centrifuge (52, 72, 102, 122) et une deuxième masse centrifuge (53, 73, 103, 123), lesquelles sont montées de manière à pouvoir tourner l'une par rapport à l'autre en s'opposant à la force d'au moins un accumulateur de force (4) et sont montées l'une par rapport à l'autre au moyen d'un palier axial (55, 76, 105, 131) et d'un palier radial (54, 74, 104, 124), le palier axial (55, 76, 105, 131) et le palier radial (54, 74, 104, 124) étant conçus comme des paliers lisses et un certain nombre de taraudages (56, 75, 125) étant ménagés dans l'une des masses centrifuges (53, 73, 103, 123, 52, 72, 102, 122) et destinés à être vissés à un vilebrequin d'un moteur à combustion interne, l'un des deux paliers (54, 74, 104, 124, 55, 76, 105, 131) parmi le palier axial et le palier radial étant disposé radialement à l'intérieur des taraudages (56, 75, 125) et l'autre des deux paliers (54, 74, 104, 124, 55, 76, 105, 131) parmi le palier axial et le palier radial étant disposé radialement à l'extérieur des taraudages (56, 75, 125), les deux masses centrifuges (52, 72, 102, 122, 53, 73, 103, 123) comportent chacune une surface de glissement (62, 63), annulaire et plane qui s'étendent dans la direction radiale et dans la direction périphérique, lesquelles surfaces de glissement sont sensiblement opposées l'une à l'autre, une bague (64) du palier axial (55) étant disposée entre les deux surfaces de glissement (62, 63), **caractérisée en ce qu'**une bague de friction (65) est disposée entre la bague (64) du palier axial (55) et une surface de glissement (62) d'une masse centrifuge (52).

2. Amortisseur de vibrations de torsion selon la revendication 1, **caractérisé en ce que** l'une des deux masses centrifuges (52, 72, 102, 122, 53, 73, 103, 123) comporte une bride (57) qui s'étend dans une direction axiale et sur laquelle l'autre des deux masses centrifuges, pourvue d'une contre-bride (58) s'étendant dans la direction axiale, est reçue radialement à l'extérieur, une bague (61) du palier radial étant disposée entre la bride et la contre-bride correspondante.

3. Amortisseur de vibrations de torsion selon la revendication 2, **caractérisé en ce que** la bague (61) est disposée entre une surface de glissement radialement intérieure de l'une des masses centrifuges (52, 72, 102, 122) et une surface de glissement radialement extérieure de l'autre masse centrifuge (53, 73, 103, 123).

4. Amortisseur de vibrations de torsion selon l'une des revendications 1 à 3, **caractérisé en ce que** la bague de friction (65) comporte au moins un élément de retenue (66) qui s'étend depuis la bague de friction dans la direction axiale et qui s'engage axialement et radialement vers l'extérieur par-dessus une saillie d'une masse centrifuge et/ou radialement vers l'intérieur autour de ladite saillie.

5. Amortisseur de vibrations de torsion selon l'une des revendications 1 à 4, **caractérisé en ce que** la bague de friction (65) comporte au moins un élément de retenue (67) qui s'étend depuis la bague de friction dans la direction axiale et qui s'engage autour de la bague de palier radialement vers l'intérieur.

6. Amortisseur de vibrations de torsion selon l'une des revendications précédentes, **caractérisé en ce que** la bague de palier comporte au moins un élément de retenue qui s'étend depuis la bague de palier dans la direction axiale et qui s'engage axialement et radialement vers l'extérieur par-dessus une saillie d'une masse centrifuge et/ou radialement vers l'intérieur autour de ladite saillie.

7. Amortisseur de vibrations de torsion selon la revendication 6, **caractérisé en ce que** l'élément de retenue (85, 106) forme une douille qui s'engage dans un évidement d'une masse centrifuge.

8. Amortisseur de vibrations de torsion selon la revendication 7, **caractérisé en ce que** l'élément de retenue (85, 106) est centré au moyen de la douille située dans la masse centrifuge.
